# NEW EUROPEAN PATENT SPECIFICATION

(11) **EP 0 491 566 B2**
(45) Date of publication and mention of the opposition decision: **23.03.2005**
(45) Mention of the grant of the patent: 02.10.1996
(21) Application number: 91311764.4
(22) Date of filing: 18.12.1991
(51) Int. Cl.: C08F 10/00, C08F 4/611

(54) **A method for the modification of catalysts intended for the polymerization of olefins**
Verfahren zur Modifikation von Katalysatoren für Olefinpolymerisation
Procédé de modification de catalyseurs de polymérisation d'oléfines

(30) Priority: 19.12.1990 FI 906282
(43) Date of publication of application: 24.06.1992
(73) Proprietor: BOREALIS A/S, 2800 Lyngby (DK)
(72) Inventor: Garoff, Thomas, SF-00840 Helsinki (FI); Leinonen, Timo, SF-06650 Hamari (FI); Iiskola, Eero, SF-06100 Porvoo (FI)
(74) Representative: Cockbain, Julian, Dr.

(56) References cited:
- EP-A- 0 045 977
- GB-A- 1 536 064
- JOURNAL OF POLYMER SCIENCE PART A : POLYMER CHEMISTRY EDITION vol. 28, no. 1, 15 January 1990, NEW YORK pages 273 - 284; JAMES C.W. CHIEN: 'Superactive and stereospecific catalysts'
- Kirk-Othmer, Encyclopedia of Chemical Technology, 3rd edition , vol.9, 1980, pp. 306-307
- JCPDS Powder Diffraction File, Table 25-1156, 1984
- ASTM X-Ray Powder Data File, 1-0947, 1960

## Description

The invention relates to a method for the preparation of catalyst compositions containing an ester of carboxylic acid for the polymerization of olefins.

Olefins, particularly alpha-olefins, are often polymerized by the aid of an catalyst composition, in which the catalyst is formed by a compound of a transition metal of the groups IV-VI of the periodic table and its by reduction activating metal compound of any of the metals of the groups I-III of the periodic table i.e. a cocatalyst. This so-called Ziegler-Natta catalyst composition has been further developed by using an inert carrier as the support of the transition metal on which the transition metal compound is layered in the aim of thus improving the activity of the catalyst when it is catalizing the polymerization reaction.

Yet, by the influence of this composition the asymmetrical olefin monomers are quite often polymerized to various kinds of stereoisomeric polymers and mixtures of isotactic, atactic and syndiotactic polymers are obtained, in which the desired stereoisomer must be separated by means of often troublesome washing stages. When a polymer of mainly of a certain stereospecific form is wanted to be prepared, e.g. an isotactic polyolefin from asymmetric olefin monomer, the influence of the catalyst on the stereospecifity of the product to be obtained has been improved by adding to the catalyst composition a donor compound, which due to a certain kind of steric structure contributes to the settling of the monomer molecule in a certain position on the catalyst particle at the end of the growing polymer molecule thus giving a certain stereoisomeric structure to the molecule chain of the polymer and making the polymer product obtained more or less such as desired.

There are two possibilities of adding a donor to the catalyst composition: already to the mixture of the transition metal compound and the carrier is added a so-called inner or internal donor or only to the mixture of the monomer and the catalyst component in the polymerization reactor when adding the cocatalyst is added a donor, whereby it is spoken of an outer or external donor. It is, of course, also possible to use a donor compound at both stages, whereby the donor can be a similar or a different kind of a compound at the various stages.

For asymmetric monomers i.e. monomers that can be stereospecifically polymerized count all but ethylene, all side groups of the two carbon atoms saturated by which are hydrogens, and the most rarely occurring case that all the side groups are similar, e.g. tetramethylethylene. The certain stereospecific form is desirable due to the fact that the properties of the obtained polymer more beneficial for a certain purpose, e.g. the isotactic polyoletins crystallize better, their bulk density is greater, their mechanical properties are better, thus they are more durable. The adhesion i.e. the adhesion properties of the atactic form are generally better as in other tactic forms and they are then suitable e.g. for adhesive applications.

When polymerizing asymmetric olefin monomers, i.e. when the groups attached to the carbon atoms joined by an unsaturated bond are different, at least as far as one group is concerned, the catalyst composition can comprise a compound improving the stereospecility of the catalyst, i.e. an electron donor, which as an electron deliverer easily can engage to the rest of the structure of the catalyst and due to its steric influence direct the monomer molecule joining the polymer chain to such a position that the created polymer molecule is in a certain way stereospecific as to its structure. A great number of various organic compounds count on such donors e.g. esters, carboxylic acids, alcohols, ketones, aldehydes, nitriles, amides, amines, organic phosphorus and silicon compounds. These compounds also have other influences on the properties of the catalyst, e.g. the activity of the catalyst varies depending on the donor used. If the donor is an ester of carboxylic acid, usual are esters of aromatic carboxylic acids, e.g. benzoates, phthalates, toluates or anisates. Of these, preferable donors are dialkylphthlates, particularly di-isobutylphthalate, which also improves the activity of the catalyst, and diethylphthalate, for which it is typical that almost pure isotactic product is obtained.

Chien et al (J. Polymer Sci: Part A: Polymer Chemistry 28 273-284 (1990)) describe the production of a Ziegler-Natta catalyst. In the process anhydrous MgCl₂ is suspended in decane. An alcohol is added at 130°C and the mixture stirred for 2 hours. Phthalic anhydride is added and the mixture stirred for a further hour. The solution is added is dropwise to TiCl₄ at -20°C and the temperature increased to 110°C. At 110°C a diester was added and the mixture stirred for 2 hours. The mixture was hot filtered and the solid re-suspended in TiCl₄ and the suspension stirred for 2 hours at 120°C. Transesterification did not take place.

As appears from the previous description of prior art, by means of the components of the catalyst composition is obtained, depending on the quality, either an active or a stereospecific catalyst composition. Thus, one problem is to obtain a catalyst composition having both a high activity and a high stereospecificity.

The above-mentioned problem has in the present invention been solved by a method, which is mainly characterised by what is said in the characterizing clause of claim 1. It has thus been realized that the aim set is achieved by transesterification of the ester of carboxylic acid used as a component of the polymerization catalyst during the preparation of the catalyst, when olefins are polymerized by means of a catalyst composition containing esters of carboxylic acids. Particularly an ester component contained in a catalyst composition as a so-called electron donor is transesterified in the invention, to improve the stereospecificity of the polymer obtained. Olefins, particularly polypropylene, may be prepared by means of such a catalyst composition, in which an ester of carboxylic acid, e.g. an electron donor, which is transesterificated during the preparation of the catalyst, is contained in the catalyst. It has thus been observed that by changing the alcohol group of the ester during the preparation of the catalyst the different influences of the donor on the course of the polymerization reaction can be utilized.

Transesterification can under normal preparation and using circumstances be carried out by choosing a carboxylic acid ester - alcohol pair which spontaneously transesterify under the circumstances mentioned.

It is, however, necessary to use elevated temperature for achieving transesterification. Hereby, the intermediate mediums and reagents often boil at such a low temperature that transesterification does not occur yet. According to the invention so high a temperature is used that a transesterification reaction succeeds.

Transesterification takes place, when a spray-crystallized or emulsion solidified carrier is in question, as follows: a spray-crystallized or emulsion solidified adduct MgCl₂*nR₁OH, in which R₁OH is an alcohol, preferably ethanol, and in which n is 1-6, is titanized with TiCl₄, whereby, apparently, the following reaction takes place:

(1) MgCl₂*nR₁OH + nTiCl₄ = MgCl₂*nTiCl₃OR₁ + nHCl

When the donor, i.e. an alkyl ester of phthalic acid (such as di-isobutyl phthalate) is added to this titanized carrier, an adduct consisting of all the components is created:

(2) MgCl₂*nTiCl₃OR₁ + nR₃COOR₂ = MgCl₂*nTiCl₃ OR₁ *nR₃COOR₂

When this adduct can be transesterificated at a temperature higher than 136°C, i.e. above the boiling point of TiCl₄, the ester groups R₁ and R₂ exchange places:

(3) MgCl₂*nTiCl₃OR + nR₃COOR₂ = MgCl₂*nTiCl₃OR₂*nR₃COOR₁

When the residue material of the catalyst is removed by extraction, an adduct of the carrier and the ester donor is obtained, in which the group originating from the alcohol of the ester has been exchanged.

(4) MgCl₂*nTiCl₃OR₂*nR₃COOR₁ = MgCl₂*nR₃COOR₁ + nTiCl₃OR₂

As the boiling point of liquid TiCl₄ is 136°C at normal pressure, the titanization can normally be carried out only at a temperature lower than that. As usually hydrocarbon solvents, such as heptane, hexane or pentane, the boiling points of which are considerably lower, are used as titanization intermediate agents the titanization temperature remains in practice below 100°C at which temperature no transesterification takes place. Accordingly, in order to achieve transesterification preferably liquids having a higher boiling temperature should be used, e.g. nonane (b.p. 151°C) and decane (b.p. 174°C) are recommendable. Hereby, one can come closer the boiling point of TiCl₄ and even pass it as a titanization temperature, whereby the transesterification reaction becomes possible.

Many kinds of compounds are also used as cocatalysts. The most usual metal is aluminium, but alkali metals Li, Na, K, alkaline earth metals and other earth metals than Al can come into question. The compounds are most usually hydrides, metal organic or halides, the most usual being Al-trialkyls, -alkylhalides, -alkoxydes, -alkoxyhalides and -halides, particularly Al-chlorides.

The carrier principally is inert, i.e. it does not, in itself, influence on the polymerization reaction, but when the catalyst particles settle on the surface of the carrier, which a good carrier compound has a lot of, the monomer molecules are offered a greater possibility to polymerize. The carrier is MgCl₂.

As, due to the replica phenomenon, the physical structure of the catalyst carrier is repeated in the whole catalyst composition and this then in the polymer product obtained, it is very important to make the physical structure or the morphology of the carrier advantageous i.e. similar to the desired product. This can be achieved by using mainly two different processes, which can, of course, also be combined: chemically, i.e. by treating the carrier with certain chemical or chemicals, or physically, i.e. by grinding the carrier in a ball mill or a spray-blowing mill. Also a method can be used in which an adduct of the carrier, in this case expressly MgCl₂, and alcohol, e.g. ethanol, is first prepared, which is melted, the melt is sprayed by means of gas to cold solvent or cold gas, whereby the adduct is crystallized morphologically to a preferred form, and this crystalline adduct is used as a catalyst carrier (see FI-862459).

In the following we present as an example case a polymerization method of olefins, in which propane is polymerized with a catalyst composition, in which spray-crystallized MgCl₂*3EtOH adduct is used, which then has been titanized with TiCl₄ in a hydrocarbon solvent in the presence of di-i-butylphthalate (DIBP). The monomer mentioned was polymerized by means of this procatalyst obtained and trialkyl-Al-cocatalyst as well as an outer donor (e.g. cyklohexylmethoxy methylsilane CMMS). If a titanization temperature high enough is used, a transesterification reaction takes place between the ethoxy groups originating from the carrier adduct and the i-butyl groups of the donor, and the donor compound created is diethylphthalate (DEP). In this way it is possible to utilize in the same process the high catalyst activity caused by the di-isobutyl phthalate (DIBP) and the high isotacticity of the polypropylene created caused by DEP. Although the following examples only describe the polymerization of a certain monomer by means of a certain catalyst composition, it is obvious that it is possible to use this transesterification reaction also for the modification of other ester components of a catalyst and that you can get the possibility to utilize the effects brought forth by the difference of these ester components on the run of the polymerization reaction. Accordingly, it must not be considered that the following examples restrict the inventive idea contained therein.

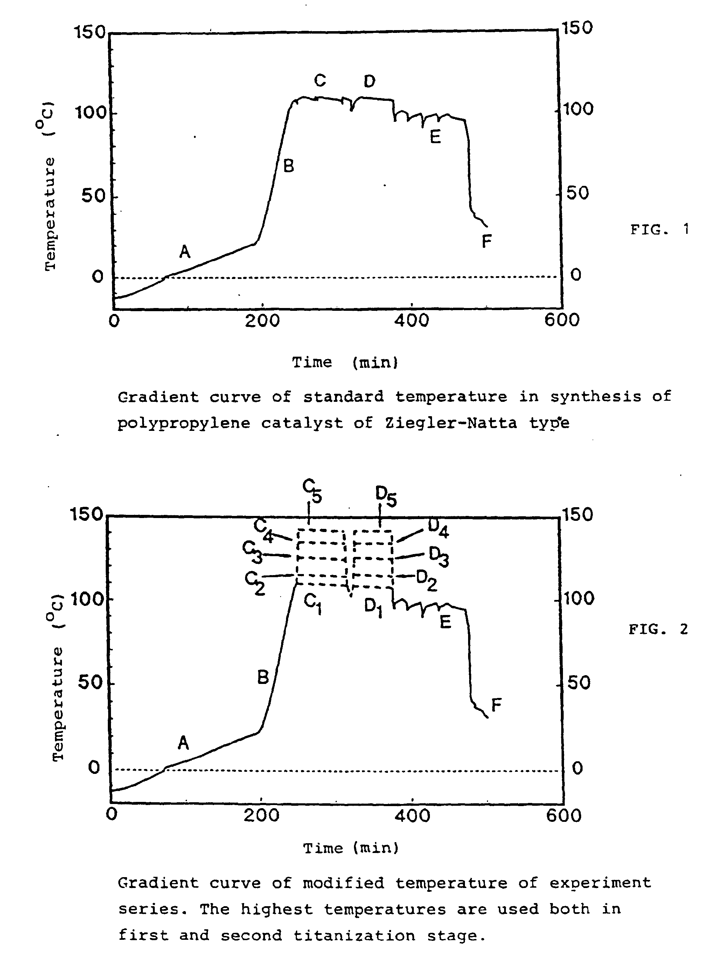

The experiment arrangement when preparing the catalyst was the following, and during the experiment the temperature changed according to figure 1 (the references A to F in the text refer to this temperature gradient figure): 0.1 moles of MgCl₂*3EtOH adduct was mixed in 150ml of hydrocarbon solvent. At the temperature of -15°C 300ml of TiCl₄ was added. The components were allowed to react during a slow rise of the temperature (A). At the temperature of +20°C 5.7ml of DIBP donor was added. The temperature rose to the level (B) and on the temperature levels (C) and (D) two titanizations were carried out. Then a hydrocarbon wash (E) and a dry wash (F) followed.

In order to examine the effect of the titanization temperature, a series of experiments was carried out, in which the temperature levels C and D were alternated, whereby the intermediate agent was nonane (C₁-C₄) and decane (C₅) and the temperatures correspondingly 110°C, 115°C, 125°C, 135°C, and 143°C. The changes in the temperature gradient curve are presented in figure 2.

The test polymerization with the catalysts obtained were carried out as follows: To a bank reactor of 2 liters was fed 25 to 30mg of procatalyst, 0.62ml of triethyl-Al, 0.20ml of 25% CMMS solution (the outer donor) dissolved in 30ml of heptane. The polymerization was carried out in 3 hours at a temperature of 70°C and in a propane pressure of 10 bars. The partial pressure of hydrogen during the polymerization was 0.2 bars.

The activity of the catalyst and the properties measured from the polypropylane obtained (the bulk density, the particle size distribution, the isotacticity) are presented in table 1, when the catalyst has been prepared using heptane or nonane as intermediate medium. The activity has been measured on the basis of the polymer yield, the isotacticity has been obtained by dissolution determination and the isotacticity index has been calculated by combining this result with the evaporation residue test result and the melt index has been measured at 230°C during 10 minutes with a load of 2.16kg. The determination of the molecular weight was carried out with a GPC-equipment.

**Table 1**

| Property | Intermediate medium in the preparation of the catalyst | |
|---|---|---|
| | Heptane (comparison) | Nonane |
| Catalyst | | |
| Total yield (g) | 14.8 | 12.7 |
| Bulk density (g/ml) | 0.44 | 0.44 |
| Ti-content | 4.4 | 3.2 |
| Activity (kgPP/g cat) | 14.3 | 14.3 |
| Activity (kgPP/g Ti) | 325 | 447 |
| Polypropylene | | |
| Isotacticity index (%) | 98.8 | 99.4 |
| Bulk density (g/ml) | 0.44 | 0.44 |
| Melt index | 10.0 | 5.5 |

It can be seen from this table that independent of the hydrocarbon intermediate agent the properties of the catalyst and the properties of the polypropylene obtained through it are almost identical. The differences that were obtained are exactly those that were desired: the activity towards titanium increased and the melt index decreased (this means narrowing of the molecular weight distribution) the isotacticity increasing, however, a little.

The effect of the titanization temperature on the total yield of the polypropylene and the bulk density as well as the titanium content of the catalyst was examined in the above-described method for the preparation of a catalyst, whereby the results presented in table 2 were obtained.

**Table 2**

| Titanization temperature (°C) | Total yield of catalyst (g) | Bulk density of catalyst | Ti-content of catalyst (%) |
|---|---|---|---|
| 110 | 12.7 | 0.44 | 3.2 |
| 115 | 14.0 | 0.44 | 3.8 |
| 125 | 11.7 | 0.53 | 2.1 |
| 135 | 9.4 | 0.50 | 2.3 |
| 143 | 7.9 | 0.46 | 2.4 |

It can be seen from this table that the titanization temperature has an optimum point in regard to the above-mentioned variables, which can be used when olefins are polymerized by means of a Ziegler-Natta-catalyst, when the ester component of a catalyst composition is modified by transesterification.

Also the activity of the catalyst and the changing of the isotacticity index of polypropylene obtained therethrough was examined in the manner described above. Hereby, the results presented in table 3 were obtained.

**Table 3**

| Titanization temperature (°C) | Activity kg PP/g Ti | Isotacticity index (%) |
|---|---|---|
| 110 | 447 | 98.9 |
| 115 | 359 | 98.9 |
| 125 | 852 | 97.9 |
| 135 | 843 | 99.1 |
| 143 | 413 | 97.0 |

Also now the optimum point can be noticed between the titanization temperature and the activity of the catalyst and correspondingly the isotacticity of the polymer obtained.

The X-ray spectrum examinations, which illustrate the amorphousness of the MgCl₂, show that a high titanization temperature causes transesterification, which can be seen in the MgCl₂'s aptitude to recrystallize. In table 4 is presented the alteration of the breadth of the crystals when the titanization temperature rises.

**Table 4**

| Breadth of the polypropylene crystals as a function of titanization temperature | |
|---|---|
| Titanization temperature (°C) | Breadth of the crystals (nm) *) |
| 110 | 6.0 |
| 115 | 5.4 |
| 125 | 6.7 |
| 135 | 8.4 |
| 143 | 8.5 |

| | |
|---|---|
| *) Determined by X-ray measurements by angle 2 0 = 50°. | |

For the sake of comparison, when heptane was used as intermediate agent in the preparation of the catalyst, when the results of table 4 had been obtained by using nonane as intermediate agent, the breadth of the crystals obtained at 50° was 4.5nm.

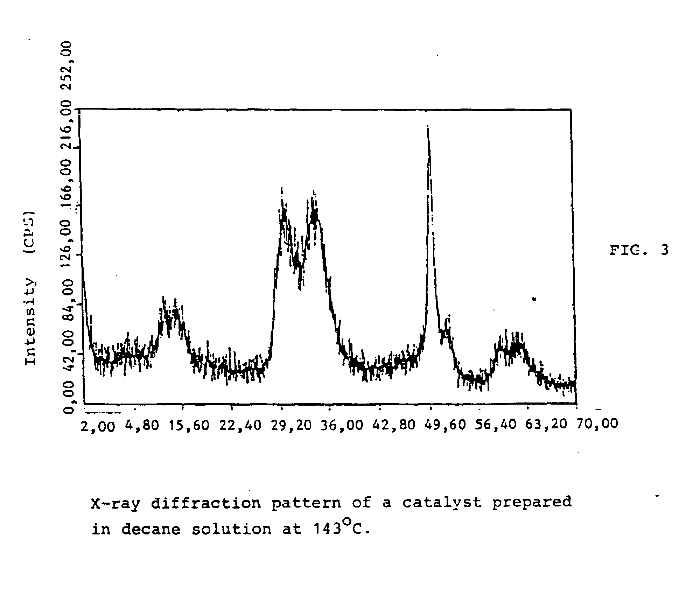

The X-ray diffraction obtained presents a much more crystalline catalyst material than what is obtained in the normal synthesis of a Ziegler-Natta catalyst. Moreover, the 15° signal is partly divided into two so that a new signal is obtained at 13° (fig. 3). This X-ray diffraction is characteristic of a transesterificated Ziegler-Natta catalyst. Normally, accordinq to the X-ray diffraction, a catalyst beinq determined as so crystalline does not have much activity.

When determining the molecule weight distribution the result presented in table 5 were obtained.

**Table 5**

| The molecule weight determinations of polypropylene as a function of titanization temperature | | | | |
|---|---|---|---|---|
| Titanization temperature (°C)/medium | Mₙ | M_{w} | Mᵥ | Polydispersity D = M_{w}/Mₙ |
| 110/heptane | 85900 | 286000 | 242000 | 3.3 |
| 110/nonane | 95200 | 297000 | 269000 | 3.5 |
| 115/nonane | 103600 | 348000 | 293000 | 3.4 |
| 125/nonane | 93200 | 340000 | 280000 | 3.7 |
| 135/nonane | 122600 | 461000 | 379000 | 3.8 |

It can be seen from this table 5 that the changes are insignificant and the transesterification does not change the catalyst's influence, at least not to worse.

The influence of the above-mentioned catalyst's titanization temperature on the usability time (lifetime) was measured so that it was determined how much the activity of the catalyst had decreased in percentages within one hour from the preparation. The results are presented in table 6.

**Table 6**

| The influence of the titanization temperature on the lifetime of the catalyst | |
|---|---|
| Titanization temperature (°C) | Lifetime (%) |
| 110 | 54 |
| 115 | 33 |
| 125 | 74 |
| 135 | 52 |
| 143 | 82 |

The lifetime results scatter a lot, but the trend seems to be that, at least, the lifetime does not shorten, on the contrary it seems to become longer at high titanization temperatures.

Owing to the high titanization temperature a complete transesterification was achieved. The original donor (DIBP) disappears as a function of the temperature and a new donor (DEP) is born. By this transesterification method the total donor amount of the catalyst can be considerably reduced without, in spite of that, decreasing the stereospecifity of the catalyst.

Due to the transesterification the wash of the catalyst becomes more efficient. Normally, it is necessary to remove with manifold washing operations the last leavings of the sideproducts created in the preparation of the catalyst: TiCl₃-ethoxide expressly attached to the most active points of the catalyst, but by the aid of transesterification this substance is changed to a donor, which, thus, is attached to the very appropriate point. The other component TiCl₃OBu of the reaction is much more dissoluble than the original ethoxy complex and thus the wash becomes more efficient.

## Claims

1. Method for the preparation of a titanium-containing Ziegler-Natta catalyst composition for the polymerization of olefins, said method comprising contacting a spray crystallised or emulsion solidified adduct of the formula MgCl₂*nR₁OH (wherein R₁OH is an alcohol and in which n is 1 to 6) with titanium tetrachloride to form a titanised carrier, adding to said titanised carrier an alkyl ester of a phthalic acid comprising a first ester -COOR₂, wherein R₂ is an alkyl group, to form a first product, **characterised in that** said first product is subjected to conditions of higher than 136°C such that said alcohol is transesterified with said first ester to form a transesterification product having a second carboxylic acid ester, comprising an ester group of the formula -COOR₁, wherein R₁ is a first alkyl group, and recovering said transesterification product as a Ziegler-Natta catalyst composition.

2. Method according to claim 1 or 2, **characterised in that** the transesterification is effected in a medium having a high boiling point.

3. Method according to claim 2, **characterised in that** the said medium is a long-chained hydrocarbon, preferably nonane or decane.

4. Method according to any one of claims 1 to 3, **characterised in that** the alkyl ester is di-isobutyl phthalate.

5. Method according to claim 4, in which the alcohol is EtOH.

## Patentansprüche

1. Verfahren zur Herstellung einer titaniumhaltigen Ziegler-Natta-Katalysatorzusammensetzung für die Polymerisation von Olefinen, wobei das Verfahren umfaßt Inkontaktbringen eines sprühkristallisierten oder emulsionsverfestigten Addukts der Formel MgCl₂*nR₁OH (worin R₁ ein Alkohol ist und worin n 1 bis 6 bedeutet) mit Titaniumtetrachlorid, um einen titaniumhaltigen Träger zu bilden, wobei ein Alkylester eines Phthalsäure, umfassend einen ersten Ester -COOR₂, worin R₂ einen Alkylrest ist, dem titaniumhaltigen Träger zugesetzt ist, um ein erstes Produkt zu bilden,
**dadurch gekennzeichnet,**
**daß** das erste Produkt Bedingungen unterworfen word, die über 136°C sind, so daß der Alkohol mit dem ersten Ester umgeestert wird um ein Umesterungsprodukt zu bilden, welches einen zweiten Carbonsäureester aufweist, umfassend eine Estergruppe der Formel -COOR₁, worin R₁ eine erste Alkylgruppe ist, und Gewinnen des Umesterungsprodukts als Ziegler-Natta-Katalysatorzusammensetzung.

2. Verfahren nach Anspruch 1 oder 2,
**dadurch gekennzeichnet,**
**daß** die Umesterung in einem Medium mit hohem Kochpunkt bewirkt wird.

3. Verfahren nach Anspruch 2,
**dadurch gekennzeichnet,**
**daß** das Medium ein langkettiger Kohlenwasserstoff, bevorzugt Nonan oder Decan ist.

4. Verfahren nach einem der Ansprüche 1 bis 3,
**dadurch gekennzeichnet,**
**daß** der Alkylester di-Isobutylphthalat ist.

5. Verfahren nach Anspruch 4, worin der Alkohol EtOH ist.

## Revendications

1. Procédé de préparation d'une composition de catalyseur Ziegler-Natta qui contient du titane pour la polymérisation d'oléfines, ledit procédé comprenant l'étape de mise en contact d'un produit d'addition cristallisé par pulvérisation ou solidifié par émulsion, de formule MgCl₂*nR₁OH (dans laquelle R₁ est un alcool et n est 1 à 6) avec du tétrachlorure de titane, pour former un véhicule qui contient du titane, et l'addition audit véhicule qui contient du titane, d'un ester d'alcoyle d'acide phtalique qui comprend un premier ester -COOR₂, dans laquelle R₂ est un groupe alcoyle, pour former un premier produit,
**caractérisé en ce que** ledit premier produit est soumis à des conditions de température supérieure à 136°C telles que ledit alcool est transesterifié avec ledit premier ester pour former un produit de transesterification ayant un second ester d'acide carboxylique, incluant un groupe ester de formule -COOR₁ dans laquelle R₁ est un premier groupe alcoyle, et l'étape de récupération dudit produit de transesterification en tant que composition de catalyseur Ziegler-Natta.

2. Procédé selon la revendication 1 ou la revendication 2, **caractérisé en ce que** la transesterification est effectuée dans un milieu ayant un point d'ébullition élevé.

3. Procédé selon la revendication 2, **caractérisé en ce que** ledit milieu est un hydrocarbure à longue chaine, de préférence le nonane ou le décane.

4. Procédé selon l'une quelconque des revendications 1 à 3, **caractérisé en ce que** l'ester d'alcoyle est le phtalate de di-isobutyle.

5. Procédé selon la revendication 4, dans laquelle l'alcool est EtOH.
